(19)

**Europäisches Patentamt**

**European Patent Office**

**Office européen des brevets**

(11) **EP 4 498 117 A1**

(12) **EUROPEAN PATENT APPLICATION**

(43) Date of publication:
**29.01.2025 Bulletin 2025/05**

(21) Application number: **23188432.1**

(22) Date of filing: **28.07.2023**

(51) International Patent Classification (IPC):
*G01S 7/41* (2006.01)    *G01S 13/42* (2006.01)
*G01S 13/58* (2006.01)    *G06N 3/045* (2023.01)
*G06N 3/0475* (2023.01)    *G01S 7/40* (2006.01)

(52) Cooperative Patent Classification (CPC):
**G01S 7/417; G01S 7/4052; G01S 7/415;**
**G01S 13/584; G06N 3/045; G06N 3/0475;**
G01S 7/4056

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Infineon Technologies AG**
**85579 Neubiberg (DE)**

(72) Inventors:
• **MEHDI, Osama**
**81829 München (DE)**
• **GOLAGHA, Mojdeh**
**81249 München (DE)**
• **SERVADEI, Lorenzo**
**81539 München (DE)**

(74) Representative: **2SPL Patentanwälte PartG mbB**
**Landaubogen 3**
**81373 München (DE)**

(54) **METHOD AND APPARATUS, METHOD AND APPARATUS FOR TRAINING A GENERATIVE MODEL TO GENERATE SYNTHETIC RADAR DATA AND SYNTHETIC RADAR DATA**

(57)    A method is proposed comprising obtaining a trained generative model and, using the trained generative model, generating synthetic radar data. The synthetic radar data is synthetic raw radar data of sampled chirps.

**EP 4 498 117 A1**

**Fig. 4**

## Description

### Field

The present disclosure relates to generation of synthetic radar data. Examples relate to a method and an apparatus, a method and an apparatus for training a generative model to generate synthetic radar data and synthetic radar data.

### Background

Many radar devices are based on a machine-learning model such as a deep neural network to perform a radar task. Such machine-learning models are data hungry in their training phase which increases the efforts to create the model and adapt it to a specific radar device or radar task. Hence, there may be a demand for an improved generation of training data.

### Summary

This demand is satisfied by the independent claims. Beneficial embodiments are described by the dependent claims.

Some aspects of the present disclosure relate to a method comprising obtaining a trained generative model, and using the trained generative model, generating synthetic radar data, the synthetic radar data being synthetic raw radar data of sampled chirps.

Some aspects of the present disclosure relate to a method for training a generative model to generate synthetic radar data, the synthetic radar data being synthetic raw radar data of sampled chirps, the method comprising training the generative model based on real raw radar data.

Some aspects of the present disclosure relate to an apparatus comprising processing circuitry configured to obtain a trained generative model, and using the trained generative model, generate synthetic radar data, the synthetic radar data being synthetic raw radar data of sampled chirps.

Some aspects of the present disclosure relate to an apparatus for training a generative model to generate synthetic radar data, the synthetic radar data being synthetic raw radar data of sampled chirps, the apparatus comprising processing circuitry configured to train the generative model based on real raw radar data.

Some aspects of the present disclosure relate to a radar system, comprising an apparatus as described herein, and a radar sensor configured to generate the real raw radar data.

Some aspects of the present disclosure relate to synthetic radar data obtainable by a method as described herein.

### Brief description of the Figures

Some examples of apparatuses and/or methods will be described in the following by way of example only, and with reference to the accompanying figures, in which

Fig. 1 illustrates an example of an apparatus;

Fig. 2 illustrates an example of real raw radar data;

Fig. 3 illustrates an example of an apparatus for training a generative model to generate synthetic radar data;

Fig. 4 illustrates an example of generative adversarial network;

Fig. 5 illustrates an example of a diffusion model;

Fig. 6 illustrates an example of a method;

Fig. 7 illustrates an example of synthetic radar data;

Fig. 8 illustrates an example of a method for training a generative model to generate synthetic radar data;

Fig. 9 illustrates an example of a radar system; and

Figs. 10a and 10b illustrate an example of a method for training a machine-learning model to perform a radar task.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

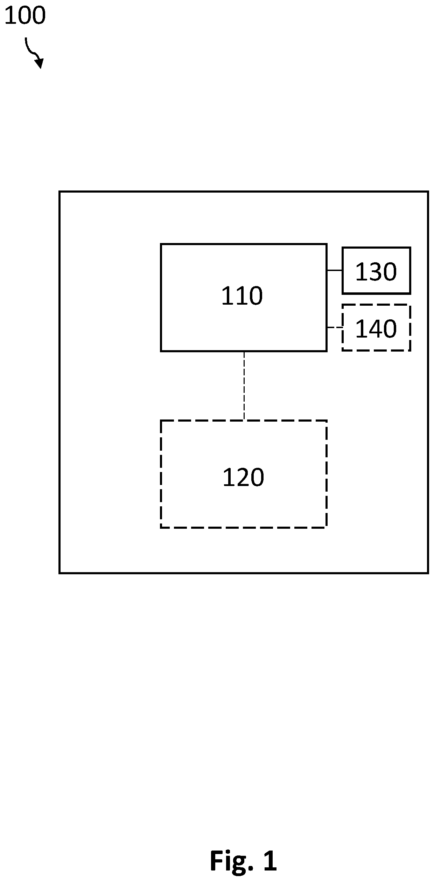

**Fig. 1** illustrates an example of an apparatus 100. The apparatus 100 comprises processing circuitry 110. Optionally, the apparatus 100 comprises interface circuitry 120. In case interface circuitry 120 is present, the interface circuitry 120 may be communicatively coupled (e.g., via a wired or wireless connection) to the processing circuitry 110, e.g., for data exchange between the interface circuitry 120 and the processing circuitry 110. The interface circuitry 120 may be any device or means for communicating or exchanging data.

The processing circuitry 110 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 110 may optionally be coupled to, e.g., read only memory (ROM) for storing software, random access memory (RAM) and/or non-volatile memory.

The processing circuitry 110 is configured to obtain a trained generative model 130. For instance, in case the apparatus 100 comprises the interface circuitry 120, the interface circuitry 120 may be configured to receive data indicating the trained generative model 130, e.g., from an external device having trained the underlying generative model. The interface circuitry 120 may be communicatively coupled to the external device or to a storage device storing the trained generative model 130. Additionally or alternatively, the processing circuitry 110 may obtain the trained generative model 130 through training or partially training a generative model, yielding the trained generative model 130. Further details on the optional training of the generative model are described below.

The processing circuitry 110 is configured to, using the trained generative model 130, generate synthetic radar data. The synthetic radar data is synthetic raw radar data of sampled chirps.

For example, the synthetic raw radar data may emulate raw data of sampled chirps originating from a radar sensor.

For example, the processing circuitry 110 may execute or run the trained generative model 130 to generate the synthetic radar data. For example, model parameters, a learned model distribution and/or an architecture of the trained generative model 130 may be loaded into memory coupled to the processing circuitry 110.

The processing circuitry 110 may run an inference phase in which the processing circuitry 110 passes input data, e.g., noisy input data, through the trained generative model 130 to obtain the synthetic radar data. For example, the processing circuitry 110 may generate the noisy input data, e.g., using a noise source, or receive the noisy input data from an external source. Alternatively, the processing circuitry 110 may run the inference phase without any input data, i.e., the inference phase may involve sampling from the learned model distribution to generate new data points, the synthetic radar data.

The inference phase may involve performing computations using, e.g., model parameters, activations functions, and/or other operations defined by the model architecture. These computations may be performed using linear algebra operations, such as matrix multiplications, convolutions, or element-wise operations, depending on the model architecture. The trained generative model 130 may comprise several layers and, at one or more of the layers, activation functions may be applied to introduce non-linearities and enable the trained generative model 130 to produce complex patterns in the synthetic radar data. Common activation functions include a Rectified Linear Unit, sigmoid, or hyperbolic tangent (tanh) functions.

The computations may be performed, e.g., in a forward propagation manner (feed-forward), where data flows through the trained generative model 130 (network) in a predefined direction. For instance, the input data may be provided to an input layer of the trained generative model 130, and data of interim results of the computations may propagate through subsequent downstream layers of the trained generative model 130 until an output layer is reached. The output layer may then output the synthetic radar data. These outputs may be interpreted, post-processed, or used for further downstream tasks, e.g., the synthetic radar data may be converted into training data (e.g., by labelling) or prepared for training a machine-learning model 140, as explained further below.

In some examples, one or more layers of the trained generative model 130 has learnable parameters, e.g., weights or biases. During inference, the processing circuitry 110 may use these parameters to compute a weighted sum of the inputs of said layer. This may be followed by an application of an activation function. The weights represent the strength of the connections between neurons in a network of the trained generative model 130, while the biases control the shift of the activation function.

Depending on the model architecture, the generative model may be trained, for instance, on a latent space or on specific input conditions. In the former case, during inference, random or specific values may be sampled from the latent space (a lower-dimensional representation of the input data), and the trained generative model 130 may generate corresponding outputs or samples in the original data space, yielding the synthetic radar data. In the latter case, the trained generative model 130 may generate samples conditioned on the input conditions. For example, the trained generative model 130 may generate the synthetic radar data using specified attributes or class labels.

For sampling the synthetic radar data, the processing circuitry 110 may use any sampling technique, such as random sampling, uniform sampling, Gaussian sampling, categorical sampling, top-k sampling, or alike.

The trained generative model 130 is a type of trained machine-learning model which has learned an underlying probability distribution of radar data. It is capable of generating new samples (forming sampled chirps), e.g., out of a noisy data input, which are similar to radar data it was trained on. The trained generative model 130 may, e.g., directly output the synthetic radar data. Instead of focusing solely on predicting an output given an input as in discrimina-tive models, generative models may model the joint probability distribution of the input variables (e.g., of real raw radar data) and output variables (of the synthetic raw radar data). This may improve the generation of realistic synthetic radar data. The automated generation of radar data may speed up and simplify the process of ground truth collection. For example, the apparatus 100 may improve a training of a machine-learning model to be trained to perform a radar task by providing more training data with less effort.

Since the trained generative model 130 may be parameterized for generating new data points (sampled chirps) that resemble the original (real) radar data of the training with a certain statistical variety, it may generate realistic but diverse synthetic radar data which follows certain statistical properties. This may enable an improvement of the training of the machine-learning model regarding realistic radar environments outside a laboratory, which may likewise improve the performance of the radar task.

Moreover, conventional approaches may determine processed radar data rather than raw radar data. Synthetic raw radar data may refer to synthetically generated uninterpreted measurements resembling, for instance, an intermediate frequency (IF) signal of a radar sensor. The synthetic raw radar data may, for instance, represent data points (samples) of synthetic received chirps or of correlations between synthetic chirps and a reference frequency. The synthetic raw radar data may be treated like real manually recorded radar signals.

Unlike the synthetic raw radar data, the processed radar data may for example be an interpretation of radar data, e.g., a range-velocity representation of radar data (range-doppler images, RDI) or micro RDIs that indicate a range and velocity of a moving object in the field of view of a radar sensor. Conventional approaches may only either generate RDIs or micro RDIs. However, in some scenarios, RDIs and micro RDIs may be needed as a pair: RDIs may show the macro movements and micro RDIs the micro movements of one and the same object. In said scenarios, the apparatus 100 may provide considerable advantages over such conventional approaches since it provides synthetic raw radar data that may then be preprocessed for training in a preferable manner, e.g., for outputting pairs of RDIs and micro RDIs.

Additionally, the preprocessing of training data may be application-specific. Therefore, directly outputting the preprocessed training data as in conventional approaches may make this data unusable for varying applications. Instead, the apparatus 100 may provide synthetic raw radar data which is flexibly applicable for any intended preprocessing. Thus, no limitation in the preprocessing may be introduced, and the specific preprocessing method may be changed or adapted as needed.

Further, a machine-learning model 140 may be trained, e.g., by the processing circuitry 110 of the apparatus 100, further processing circuitry of the apparatus 100 (different to the processing circuitry 110) and/or processing circuitry external to the apparatus 100. In the former case, the processing circuitry 110 may be further configured to train the machine-learning model 140 to perform the radar task based on the synthetic radar data. For instance, the synthetic radar data may be used as training data or to derive training data (e.g., an RDI or alike).

The machine-learning model 140 is to be understood as a data structure and/or set of rules representing a statistical model that can be used to perform the radar task without using explicit instructions, instead relying on models and inference. The data structure and/or set of rules represents learned knowledge which is acquired based on training performed by a machine-learning algorithm using the training data. For example, in order to perform the radar task, a transformation of data may be used that is inferred from an analysis of the training data. The machine-learning model 140 may, in some examples, be a deep neural network (DNN).

Training data refers to information or examples used to train the machine learning model. It may comprise a collection of input data fed into a training framework for training the machine-learning model 140 and optionally corresponding labels, output or target values (e.g., in case of supervised learning). The training data proposed herein is based on synthetic raw radar data, as explained further below. The purpose of such training data may be to enable the machine-learning model 140 to learn and generalize patterns, relationships, and rules from the provided examples.

The radar task may be any ranging and/or detection based on radar data or data derived thereof. For instance, performing the radar task may include gesture sensing, presence sensing, vital sensing, signal denoising, clutter suppression, tracking, or detection of at least one of a gesture, a motion, a micro-motion, a macro-motion and presence of a target based on further radar data, i.e., radar data generated by a radar sensor and processed during an operation of the trained machine-learning model.

Using a trained machine-learning model 140 for a radar task may offer numerous advantages over conventional techniques. For example, a trained machine-learning model 140 may excel at recognizing complex patterns and relationships within data to perform the radar task, it may continuously adapt and learn from new data allowing it to improve its performance over time or may reduce the need for manual intervention and thereby speed up response times in performing a radar task.

However, the performance of the machine-learning model 140 may strongly depend on the quality and quantity of the training data (ground-truth data). Conventionally, a developer may manually operate a radar sensor in a laboratory setting to collect sufficient amount of training data to train the machine-learning model 140 for achieving high performance and accuracy. Manual data collection usually is an expensive, time-consuming and difficult process. Further, it may be bound to the laboratory environment which may be an insufficient representative for the real world: the training data collected in the lab may be one-sided and non-diverse, not covering variations that happen in practice due to noise or other environmental conditions.

By contrast, the apparatus 100 may simplify the generation of training data and provide more diverse training data by automatically generating high-fidelity synthetic raw radar data. It may thereby decrease the effort of manual data collection.

The processing circuitry 110 may train the machine-learning model 140 by inputting the training data or (an input part thereof) into the machine-learning model 140 and adjust an internal parameter of the machine-learning model 140 such that a difference between an output of the machine-learning model 140 and an actual output (e.g., a corresponding label of the training data) is decreased.

The processing circuitry 110 may train the machine-learning model 140 using any machine learning or training algorithm. For example, the machine-learning model 140 may be trained using supervised learning. In supervised learning, the machine-learning model 140 is trained using a plurality of training samples, wherein each sample may comprise a plurality of input data values, and a plurality of desired output values, i.e., each training sample is associated with a desired output value. By specifying both training samples and desired output values, the machine-learning model 140 "learns" which output value to provide based on an input sample that is similar to the samples provided during the training.

For example, the training data generated by the apparatus 100 may comprise multiple of such training samples used as input data and one or more labels as desired output data. The labels may be determined manually or automatically. In the latter case, the processing circuitry 110 may be further configured to determine labelled data through labelling the synthetic radar data or data derived thereof for the radar task and train the machine-learning model 140 based on the labelled data. The labels may indicate the solution to the targeted radar task, e.g., presence of a target or alike.

Apart from supervised learning, semi-supervised learning may be used. In semi-supervised learning, some of the training samples lack a corresponding desired output value. Supervised learning may be based on a supervised learning algorithm (e.g., a classification algorithm or a similarity learning algorithm). Classification algorithms may be used as the desired outputs of the trained machine-learning model 140 are restricted to a limited set of values (categorical variables), i.e., the input is classified to one of the limited set of values (e.g., no, one or multiple targets detected). Similarity learning algorithms are similar to classification algorithms but are based on learning from examples using a similarity function that measures how similar or related two objects are.

Apart from supervised or semi-supervised learning, unsupervised learning may be used to train the machine-learning model 140. In unsupervised learning, (only) training data is supplied, and an unsupervised learning algorithm is used to find structure in the training data such as training and/or historical radar data (e.g., by grouping or clustering the training data, finding commonalities in the training data). Clustering is the assignment of training data comprising a plurality of input values into subsets (clusters) so that input values within the same cluster are similar according to one or more (predefined) similarity criteria, while being dissimilar to input values that are included in other clusters.

Optionally or alternatively, reinforcement learning may be used to train the machine-learning model 140. In reinforcement learning, one or more software actors (called "software agents") are trained to take actions during the training. Based on the taken actions, a reward is calculated. Reinforcement learning is based on training the one or more software agents to choose the actions such that the cumulative reward is increased, leading to software agents that become better at the task they are given (as evidenced by increasing rewards).

Furthermore, additional techniques may be applied to some of the machine-learning algorithms. For example, feature learning may be used. In other words, the machine-learning model 140 may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model 140 may at least partially be trained using anomaly detection, and/or the machine-learning algorithm may comprise an anomaly detection component.

In some examples, the machine-learning algorithm may use a decision tree as a predictive model. In other words, the machine-learning model 140 may be based on a decision tree. In a decision tree, observations about an item (e.g., a set of input radar data) may be represented by the branches of the decision tree, and an output value corresponding to the item may be represented by the leaves of the decision tree. Decision trees support discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model 140 may be based on one or more association rules. Association rules are created by identifying relationships between variables in large amounts of data. The machine-learning algorithm may identify and/or utilize one or more relational rules that represent the knowledge that is derived from the data. The rules may, e.g., be used to store, manipulate or apply the knowledge.

For example, the trained machine-learning model 140 may be an Artificial Neural Network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receive input values (e.g., (further) radar data, and RDI or alike), hidden nodes that are (only) connected to other nodes, and output nodes that provide output values (e.g., indicating a solution to the radar task). Each node may represent an artificial neuron. Each edge may transmit information from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an ANN may comprise adjusting the weights of the nodes and/or edges of the ANN, i.e., to achieve a desired output for a given input.

Alternatively, the machine-learning model 140 may be a support vector machine, a random forest model or a gradient boosting model. Support vector machines (i.e., support vector networks) are models trained by supervised learning with associated learning algorithms that may be used to analyze data (e.g., in classification or regression analysis). Support vector machines may be trained by providing an input with a plurality of training input values of the training data that belong to one of two categories (e.g., target detected or not). The support vector machine may be trained to assign a new input value to one of the two categories. Alternatively, the machine-learning model 140 may be a Bayesian network, which is a probabilistic directed acyclic graphical model. A Bayesian network may represent a set of random variables and their conditional dependencies using a directed acyclic graph. Alternatively, the machine-learning model 140 may be based on a genetic algorithm, which is a search algorithm and heuristic technique that mimics the process of natural selection. In some examples, the machine-learning model 140 may be a combination of the above examples.

Apart from the synthetic radar data, real raw radar data may be used for the training of the machine-learning model 140. Thus, in some examples, the processing circuitry 110 is further configured to train the machine-learning model 140 to perform the radar task based on real raw radar data. For instance, the training data (e.g., features and corresponding labels) may be based on the synthetic raw radar data while the real raw radar data may be used to create testing data. Testing data, e.g., a test set or validation set, may be a separate data set used to evaluate a performance of the (trained, untrained or partially trained) machine learning model. The testing data comprises input data and corresponding desired output data is also withheld. The machine-learning model's performance may be assessed through making predictions on the testing data and comparing the predicted outputs with the desired output data. This evaluation may help estimate how well the machine-learning model 140 is likely to perform on unseen radar data. By using a separate testing dataset, potential issues like overfitting where the machine-learning model 140 performs well on training data but poorly on new data may be identified. Optionally, the processing circuitry 110 may trigger the generation of further training data in case the performance is not yet good enough for a target application.

Optionally or alternatively, part of the training data and/or at least part of the real raw radar data is used as validation data. Validation data may be used to fine-tune hyperparameters of the machine-learning model 140 and to make decisions during the model development process, such as selecting the model architecture or tuning regularization parameters.

In some examples, the real raw radar data may be data used for training the generative model, as explained further below.

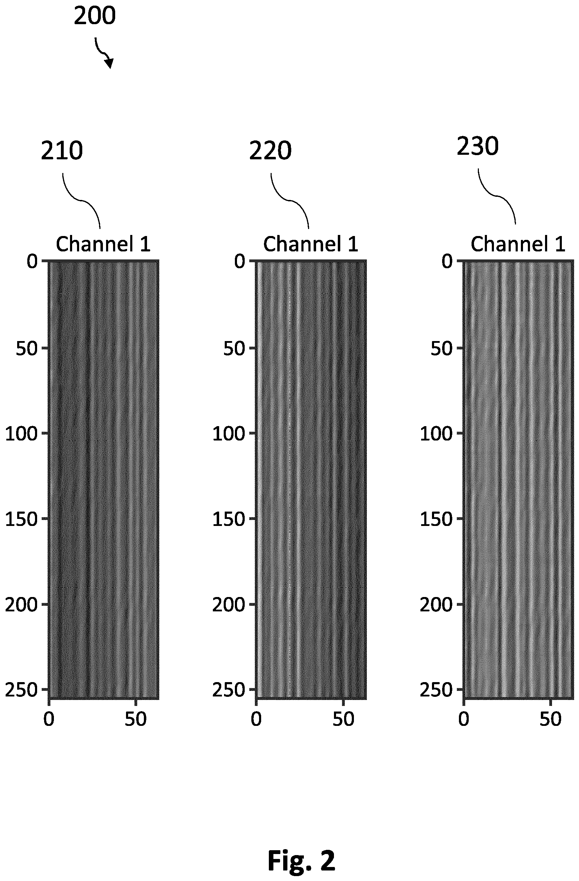

The real raw radar data may be radar data recorded by a radar sensor, such as data indicating an IF signal of the radar sensor. For instance, real raw radar data may be multi-dimensional data arranged in an array (e.g., chirps arranged in slow time over fast time). The real raw radar data may, in some examples, indicate sampled chirps received from multiple channels of the radar sensor. An example of such real raw radar data is illustrated by Fig. 2. **Fig. 2** shows an example of real raw radar data 200. The real raw radar data 200 indicates three sets of sampled chirps 210, 220, 230 received from a respective channel of a radar sensor. For instance, the real raw radar data 200 may be recorded by a 60 GHz (Gigahertz) radar sensor with one transmitting antenna and three receiving antennas. The slow time of the chirps is arranged along a first dimension of each of the sets of sampled chirps 210, 220, 230. In the example of Fig. 2, each of the sets of sampled chirps 210, 220, 230 comprises 256 chirps. The fast time (samples) of the chirps is arranged along a first dimension of each of the sets of sampled chirps 210, 220, 230. In the example Fig. 2, each of the sets of sampled chirps 210, 220, 230 comprises 64 samples per chirp. Thus, the real raw radar data may be of a size (3, 256, 64). The shading of the sets of samples chirps 210, 220, 230 shown in Fig. 2 may indicate a signal strength of the received radar signal for each chirp and sample.

Referring back to Fig. 1, the apparatus 100 may in some examples perform the above-mentioned preprocessing for training the machine-learning model 140. For example, the processing circuitry 110 may be configured to extract at least one signal characteristic from the synthetic radar data and train the machine-learning model 140 based on the extracted at least one signal characteristic. The signal characteristic may be any interpretation of the synthetic radar data, such as a size, reflectivity, range, velocity or angle of a target as well as spectral characteristics or clutter characteristics of the synthetic radar data.

In some examples, the processing circuitry 110 is further configured to determine at least one of a range-velocity representation (e.g., an RDI) and a range-angle representation of the synthetic radar data and train the machine-learning model 140 based on the determined at least one of the range-velocity representation and the range-angle representation of the synthetic radar data. The processing circuitry 110 may determine a range-velocity representation of the synthetic radar data through, e.g., applying a multi-dimensional Fourier transform to the synthetic radar data. The processing circuitry 110 may determine a range-angle representation of the synthetic radar data through range processing, e.g., applying range compression or matched filtering to the synthetic radar data, and subsequent channel processing, e.g., applying a phase monopulse or phase interferometry to the synthetic radar data. The processing circuitry 110 may then train the machine-learning model 140 through feeding the at least one of the range-velocity representation and the range-angle representation of the synthetic radar data as training input into a training framework for training the machine-learning model 140.

Additionally or alternatively, the processing circuitry 110 may determine any radar data modality or representation of the synthetic radar data and train the machine-learning model 140 based thereon. The type of representation may depend on the targeted radar task and the radar sensor configuration. For example, the processing circuitry 110 may determine at least one of a range-range rate representation, a polarimetric representation, a holographic representation, a synthetic aperture and a range-cross-range coherent change representation of the synthetic radar data.

In some examples, the processing circuitry 110 may be further configured to determine a range-micro-velocity representation and a range-macro-velocity representation of the synthetic radar data and train the machine-learning model 140 based on the determined range-micro-velocity representation and the determined range-macro-velocity representation of the synthetic radar data. This may address such scenarios in which a pair of micro- and macro-representations are used for performing the radar task. The apparatus 100 may provide additional advantages in these scenarios since conventional approaches may solely provide separated range-macro-velocity representations and range-micro velocity representations which cannot be paired afterwards.

Likewise, real raw radar data, if available, may be processed to yield a desired representation for the training of the machine-learning model 140. For example, the processing circuitry 110 may be further configured to determine at least one of a range-velocity representation and a range-angle representation of the real raw radar data and train the machine-learning model 140 based on the determined at least one of the range-velocity representation and the range-angle representation of the real raw radar data. Additionally or alternatively, the processing circuitry 110 may be further configured to determine a range-micro-velocity representation and a range-macro-velocity representation of the real raw radar data and train the machine-learning model 140 based on the determined range-micro-velocity representation and range-macro-velocity representation of the real raw radar data. This may enable a side-by-side processing of the synthetic radar data and the real raw radar data for training the machine-learning model 140.

When having completed the training of the machine-learning model 140, a trained machine-learning model is obtained. The trained machine-learning model may be used for performing the radar task, e.g., by the apparatus 100, by a further apparatus external to the apparatus 100 or jointly by both in a distributed processing environment. In the former case, the processing circuitry 110 may be further configured to perform the radar task through analyzing further radar data using the trained machine-learning model. The further radar data may be real radar data recorded by a radar sensor for the performance of the radar task. For instance, the interface circuitry 120 may receive the further radar data from the radar sensor. Alternatively, the apparatus 100 may be at least partially integrated into the radar sensor and determine the further radar data based on a radar signal received by the radar sensor.

The processing circuitry 110 may be configured to perform the radar task, e.g., through detecting at least one of a gesture, a motion, a micro-motion, a macro-motion and presence of a target based on the further radar data. For example, the further radar data or data derived thereof may be fed as input into the trained machine-learning model. The trained machine-learning model may then output the at least one of a gesture, motion, micro-motion, macro-motion and presence of the target.

The micro-motion and the macro-motion may refer to different types and scales of motion exhibited by a target. Micro-motion may refer to a small-scale movement or vibration of individual components or parts of a target. These movements may be periodic, quasi-periodic, or random. Micro-motion may be detected and analyzed by examining fine Doppler signatures present in the further radar data (radar returns). Macro-motion may refer to the overall or bulk motion of an entire target or object. It may involve the target's translational motion or changes in its position or velocity over a larger scale. Macro-motion may be characterized by the range or range-rate information obtained from the further radar .

As mentioned above, the trained generative model 130 may be determined by the apparatus 100 itself (e.g., by the processing circuitry 110 or by further processing circuitry of the apparatus 100), by a different further apparatus external to the apparatus 100 or jointly by the apparatus and the further apparatus, e.g., based on distributed processing. In the former case, the processing circuitry 110 may further be configured to train a generative model based on real raw radar data (e.g., the real raw radar data used for training the machine-learning model 140), yielding the trained generative model 130.

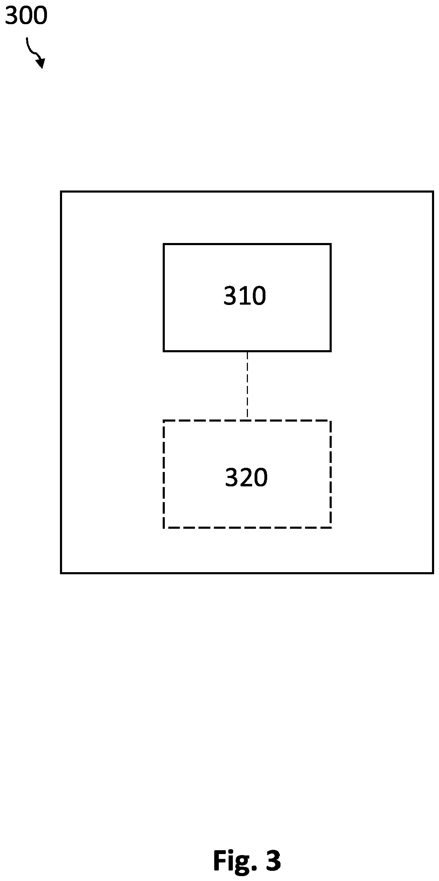

More details on how the generative model may be trained are explained with reference to **Fig.** 3. Fig. 3 illustrates an example of an apparatus 300 for training a generative model to generate synthetic radar data. The synthetic radar data is synthetic raw radar data of sampled chirps, as explained above. The apparatus 300 may be integrated or be the apparatus 100. Alternatively, the apparatus 300 may be external to the apparatus 100. In the latter case, the apparatus 300 comprises optional interface circuitry 320 configured to send the trained generative model (130) to the apparatus 100.

The apparatus 300 comprises processing circuitry 310 configured to train the generative model based on real raw radar data. The processing circuitry 310 may be the processing circuitry 110 of the apparatus 100 above or external to the processing circuitry 100.

The real raw radar data which is used for training the generative model may be reused for training the machine-learning model 140, as explained above. The real raw radar data may be multi-dimensional data arranged in an array. In some examples, the real raw radar data may indicate sampled chirps received from multiple channels of a radar sensor.

The generative model may be trained by using any learning or training method (or training framework). For example, the processing circuitry 310 may train the generative model using maximum likelihood estimator, a variational autoencoder, a restricted Boltzmann machine or alike. In some examples, the processing circuitry 310 is configured to train the generative model using a generative adversarial network (GAN) or a diffusion model. These two training methods may be particularly advantageous for training a generative model to generate synthetic radar data: A GAN may train the generative model to provide especially diverse and varied output since it teaches complex and multimodal data distributions. This may enable a realistic recreation of radar data with simulated environmental changes. A diffusion model may provide a stable and well-behaved training, which may decrease the training efforts and increase the predictability and reliability of the training outcome.

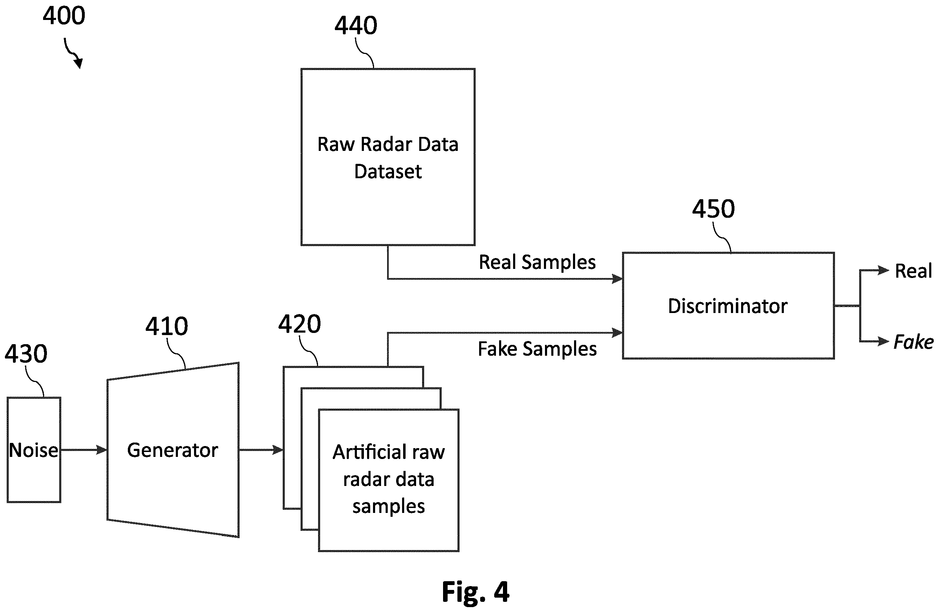

An example of a GAN 400 is illustrated by **Fig. 4.** The general structure of GAN 400 includes two neural networks, trained in an adversarial setting. The first network, the (initially untrained) generative model (generator $G$) 410, is configured to try generating artificial data (synthetic radar data 420) from noise ($z$) 430, sampled from a random noise distribution $p_z(z)$, which is preferably as close as possible to real raw radar data 440. The GAN 400 is configured to learn the data distribution $p_g$ over the input data ($x$) (real raw radar data 440). Its "opponent", the second network 450 (discriminator $D$), is configured to distinguish between real samples from raw radar data 440 and the synthetic radar data 420 created by G, with $D(x)$ being the probability of a sample being part of the real dataset 440 rather than from the synthetic one 420. The generative model 410 is configured to try increasing (e.g., maximizing) a loss of $D$, by creating samples for the synthetic radar data 420 that are indistinguishable from real samples 440, decreasing (e.g., minimizing) $log$ (1 - $D(G(z))$). The discriminator 450 is configured to try decreasing (e.g., minimizing) the loss D by classifying the samples to be checked correctly. This may result in both networks 410, 450 competing against each other in a minimax problem according to Equation 1:

$$min_G max_D V(D,G) = \mathbb{E}_{x\sim P_{data}(x)}[logD(x)] + \mathbb{E}_{z\sim p_z(z)}\left[log\left(1 - D\left(G(z)\right)\right)\right]$$

Equation 1, where the term "min$_G$ max$_D$ V(D, G)" represents a minimax optimization problem, where "min$_G$" refers to minimizing the objective with respect to the generator (G) 410 and "max$_D$" refers to maximizing the objective with respect to the discriminator (D) 450.

In Equation 1, the term "V(D, G)" represents the value function which evaluates the performance of the discriminator 450 and generator 410 in the GAN 400. The value function quantifies how well the discriminator 450 is able to distinguish between real and synthetic data. The goal of the GAN training is to find the optimal values for the generator 410 and discriminator 450 that minimize this value function.

Both networks 410, 450 may be interdependent and may be trained simultaneously. The aim of GAN 400 may be to balance the performance of both the generative model 410 and the discriminator 450.

The generative model 410 may learn and improve iteratively with this process. The training may be completed, e.g., when convergence criteria are fulfilled indicating that the model has reached a satisfactory level of training. These criteria may include metrics like a loss function value, validation metrics, or the stability of model parameters. Training may be stopped when these metrics stabilize or show decreased improvement. Alternatively, the training may be completed when evaluation metrics of a predefined level are reached. Evaluation metrics may be employed to assess the quality of the generated samples. These metrics may include perceptual quality measures, such as the Inception Score or Frechet Inception Distance.

The trained generative model 410 may then be capable of generating synthetic radar data, as described above with reference to Fig. 1.

Referring back to Fig. 3, the processing circuitry 310 may be configured to train the generative model using a style-based GAN. This may be a type of GAN which adds control over the general style of the synthetic radar data (artificially created samples). A style-based GAN (e.g., StyleGAN) may use a style-based generative model. Building on the architecture of progressive growing GANs, the generation of synthetic radar data may be trained by gradually increasing the size of the discriminator and the generative model, e.g., by adding layers. Added layer may raise the output resolution of the synthetic radar data. For more reliability and consistency, a style-based GAN may be implemented as StyleGAN2 which may create higher resolution images with lower computational cost.

In a style-based implementation, the processing circuitry 310 does not directly input the latent vector z into the generative model. Instead, it may be first mapped to an intermediate space W using a mapping network f comprising eight consecutive fully connected layers. Styles y = (y$_s$,y$_b$) for each layer may be generated from w ∈ W by applying learned affine transformations. These styles may be used to control adaptive instance normalization (AdaIN) actions, with AdaIN being a means for aligning the mean and variance of the content features with those of the style features, thus aligning the style to the input data (real raw radar data). The AdaIN layers may be placed at convolutional layers of upsampling blocks in the generative model (network). Additionally, noise may be sampled and added before input to each AdaIN layer and at every output of a convolutional layer. The noise may allow the generative model to get more control over local changes in the synthetic radar data, creating more stochastic detail in the synthetic image. Adding per-pixel noise throughout the upsampling process may even increase the performance of the generative model.

Furthermore, bilinear upsampling and downsampling or adding a mixing regularization may be implemented in the style-based GAN. For example, at inference, different layers may be fed with varying latents, creating a disentangled latent space, thereby improving the performance of the style-based generative model.

The following additional techniques may be implemented to avoid droplet-like specs in the synthetic radar data due to amplification of feature maps when using style mixing: For example, weight demodulation may be used instead of a normalization technique. The weight demodulation may scale output feature maps to restore the outputs to unit standard deviation removing the droplet-like artifacts from the synthetic radar data.

Further, lazy regularization may be applied, e.g., once every 16 mini-batches, instead of optimizing the generative model simultaneously to the loss. This may reduce the computational cost without significantly impacting performance. Applying path length regularization may result in more consistent and reliable behavior of the generative model. Instead of a feedforward generative model, in some examples, a skip connection generative model may be used. The discriminator may, then, use a residual net structure which may improve the Frechet inception distance.

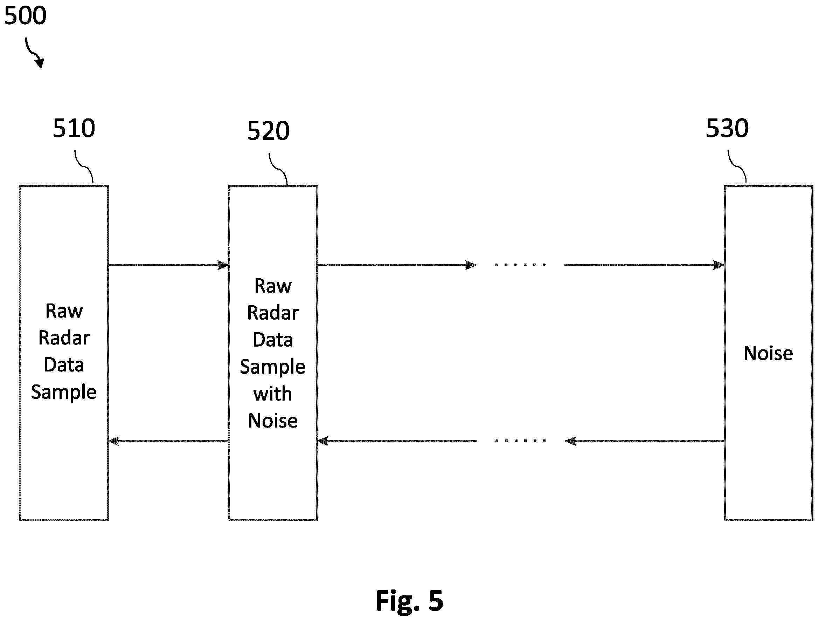

An example of a diffusion model 500 is illustrated by **Fig. 5.** The diffusion model 500 may be based on non-equilibrium thermodynamics. In a forward diffusion process, noise may be gradually added to a sample of real raw radar data 510, yielding real raw radar data with noise 520, until it dissolves into pure noise 530. This may enable the creation of a desired data distribution out of any distribution. A generative model of the diffusion model 500 is configured to learn how to reverse the diffusion process, allowing the generative model to generate synthetic raw radar data.

Equation 2 describes an example of a forward diffusion:

$$q\left(x_{(1:T)}\big|x_0\right) = \prod_{t=1}^{T} q\left(x_{(t)}\big|x_{(t-1)}\right) \qquad q\left(x_t\big|x_{t-1}\right) := \mathcal{N}\left(x_t; \sqrt{1-\beta_t}\, x_{t-1}, \beta_t I\right)$$

Equation 2, where the posterior $q(x_{(1:T)} | x_0)$ is approximated by adding small amounts of Gaussian noise to the real raw radar data $x_0 \sim q(x_0)$ over a period of time $T$ with a variance $\beta_t$, obtaining a number of samples with added noise $x_1 \dots x_T$.

In Equation 2, the term "$q(x_{(1:T)}|x_0)$" represents the conditional distribution of the variables $x_1$ to $x_T$ given the initial value $x_0$. It represents the distribution of the sequence of variables over time. The term " $\prod_{t=1}^{T} q\left(x_{(t)}\big|x_{(t-1)}\right)$ " represents the product of individual conditional distributions for each time step from a first point in time t = 1 to later point in time T. In other words, it indicates that the distribution at each time step depends on the previous time step. The term "$q(x_t| x_{t-1})$" defines the conditional distribution of each variable xt given its previous value $x_{t-1}$. It specifies that this conditional distribution follows a Gaussian (normal) distribution. The Gaussian distribution has a mean $\sqrt{(1-\beta_t)}\, x_{t-1}$, where $x_{t-1}$ is the previous value, and $\beta_t$ is a scalar factor that determines the variance. The term $\sqrt{(1-\beta_t)}$ scales the previous value $x_{t-1}$ by a factor of $(1-\beta_t)$, while $\beta_t$ I represents a diagonal covariance matrix with variances $\beta_t$ on the diagonal.

The forward diffusion model may thus assume that the distribution of each variable $x_t$ at time t depends on its previous value $x_{t-1}$ and that it follows a Gaussian distribution. The mean of the Gaussian distribution is scaled by a factor of $\sqrt{(1-\beta_t)}$ based on the previous value, and the variance is determined by the scalar factor $\beta_t$.

Reversing the diffusion process may be done by learning how to predict the transitions in the forward process. For example, a distribution $p_\theta(x_{0:T})$ of the diffusion processed real raw radar data over time may be estimated by a Markov chain starting at a distribution p at time T, $p(x_T) = \mathcal{N}(x_T; 0, I)$, according to Equation 3:

$$p_\theta(x_{0:T}) := p(x_T) \prod_{t=1}^{T} p_\theta(x_{t-1}|x_t), \qquad p_\theta(x_{t-1}|x_t) := \mathcal{N}\left(x_{t-1}; \mu_\theta(x_t, t), \Sigma_\theta(x_t, t)\right)$$

Equation 3, where $\mu_\theta(x_t, t)$ is the mean and $\Sigma_\theta(x_t, t)$ the variance of the data distribution. $p_\theta(x_{0:T})$ represents the joint distribution of the variables $x_0$ to $x_T$. It captures the probability distribution of the entire sequence of variables. The term "$p(x_T)$" represents the marginal distribution of the final variable $x_T$. It describes the probability distribution of $x_T$ independently, without considering the other variables in the sequence. The term " $\prod_{t=1}^{T} p_\theta(x_{t-1}|x_t)$ " represents the product of conditional distributions for each time step from t = 1 to T. It indicates that the distribution of each variable $x_{t-1}$ given $x_t$ depends on the next time step.

The second part of Equation 3, $p_\theta(x_{t-1}|x_t)$, defines the conditional distribution of each variable $x_{t-1}$ given $x_t$. It specifies that this conditional distribution follows a Gaussian (normal) distribution. The notation represents a Gaussian distribution with mean $\mu_\theta(x_t,t)$ and covariance matrix $\Sigma_{\theta(xt,t)}$. The mean $\mu_{\theta(xt,t)}$ and covariance $\Sigma_{\theta(xt,t)}$ are parameterized by $\theta$, which represents a set of parameters. The mean and covariance matrix can vary depending on xt and t.

By sampling from Gaussian noise $x_T \sim \mathcal{N}(0, I)$ and applying the reverse diffusion process on it, synthetic raw radar data may be created. To train the generative model of the diffusion model 500, the variational bound may be optimized on negative log-likelihood according to Equation 4:

$$E[-\log p_\theta(x_0)] \leq E_q\left[-\log \frac{p_\theta(x_{0:T})}{q(x_{1:T}|x_0)}\right] = E_q\left[-\log p(x_T) - \sum_{t\geq 1} \log \frac{p_\theta(x_{t-1}|x_t)}{q(x_t|x_{t-1})}\right] =: L$$

Equation 4. The inequality of Equation 4 and the subsequent formula represent an evaluation of the negative log-likelihood for a probabilistic model. It compares the negative log-likelihood of the initial variable $x_0$ with an average negative log-likelihood over the entire sequence of variables $x_{(0:T)}$ under the true distribution and the proposal distribution. The resulting value, denoted as L, provides a measure of how well the model fits the observed data.

Equation 4 compares the negative log-likelihood of the initial variable $x_0$ under the true distribution $p_{\theta(x_0)}$ with an expectation taken over a proposal distribution $q(x_{(1:T)} | x_0)$. The expectation represents the average negative log-likelihood of the entire sequence of variables $x_{(0:T)}$ under the ratio of the true distribution and the proposal distribution.

The term " $E_q\left[-\log p(x_T) - \sum_{t\geq 1} \log \frac{p_\theta(x_{t-1}|x_t)}{q(x_t|x_{t-1})}\right]$ " further expands the expectation to in-clude the negative log-likelihood of the final variable $x_T$ and the sum of the logarithmic ratios of the conditional distributions $p_{\theta(x_{t-1}|x_t)}$ and $q_{(x_t|x_{t-1})}$ for each time step t. The symbol L represents the negative log-likelihood, which is the value obtained from the above expectation. It serves as a measure of how well the probabilistic model represented by $p_\theta$ fits the observed data. The lower the negative log-likelihood value, the better the model fits the data.

Since the diffusion model 500 does not need to be trained in an adversarial setting, its training may be easier compared to the training of GANs. However, it may take longer to train the diffusion model 500 and to sample data due to the number of steps needed for the forward and backward diffusion processes.

Once the training is completed, the generative model of the diffusion model 500 may be capable of reversing the learned diffusion process, i.e., generating synthetic radar data out of noise.

Referring back to Fig. 3, the processing circuitry 310 may in some examples be configured to train the generative model using a latent diffusion model. The latent diffusion model may include an autoencoder to reduce a dimension of the raw radar data into a latent space. A diffusion process may then be run in the resulting latent space. Random noise may be then sampled and run through the reverse diffusion process, creating an encoded sample of synthetic raw radar data. A decoder of the autoencoder may decode this lower-dimensional sample, creating the synthetic raw radar data.

Thus, the latent diffusion model may perform none of the two diffusion processes directly in the pixel space. Instead, the latent diffusion model may have a compressing part compressing the samples of the real raw radar data into the latent space with a lower dimension, while a diffusion part may run the diffusion operations. In a first part of the training, an autoencoder may be used to encode and decode the real raw radar data. This autoencoder may be trained beforehand based on a regularization technique. For example, a VQ-regularization may be used which creates an architecture similar to a VQ-GAN. Alternatively, a KL-regularization may be used which may result in a behavior similar to that of a variational autoencoder.

The compression model may encode the input x (real raw radar data) into a lower-dimensional latent space z using its encoder E, by downsampling the input x. A decoder D may then transform z back to the input space. This approach may allow for more flexibility and optimization in how the latent space is created. Additionally, using an autoencoder before running the diffusion operations may reduce the complexity, thus creating a more efficient diffusion process.

In some examples, the processing circuitry 310 may be configured to train the generative model through setting hyperparameters of the generative model. For example, hyperparameters may include learning rate, batch size, number of hidden layers, number of units per layer, regularization parameters, activation functions, dropout rates, and alike. These values may control the speed of convergence, the complexity of the generative model, the amount of regularization, or the capacity of the generative model to generalize. The processing circuitry 310 may, for instance, perform a tuning of the hyperparameters, i.e., it may determine, e.g., iteratively, values for the hyperparameters to select those with increased performance. The processing circuitry 310 may perform the tuning by using, e.g., grid search, random search, Bayesian optimization, or alike.

In other training implementations where supervised learning is applied, the processing circuitry 310 is further configured to determine labelled data through labelling the real raw radar data or data derived thereof, wherein the processing circuitry is configured to train the generative model based on the labelled data.

In some examples, the processing circuitry 310 is further configured to convert the real raw radar data into a Portable Network Graphics (PNG) format or a Hierarchical Data Format (HDF). The processing circuitry 310 may be configured to train the generative model based on the converted real raw radar data. This may simplify the training process. For example, a HDF5 file may be used as input for the GAN or diffusion model. A HDF5 dataset may be considered a containers, comprising the data itself and metadata describing it, allowing a structure that is similar to that of a NumPy Array. With PNG files, data may be split into different directories, with a label as name of a subdirectory indicating a class of the subpart of the data stored therein.

For having a more stable and robust training, a normalized input may be preferrable for the training. For example, the processing circuitry 310 may be further configured to normalize the real raw radar data and train the generative model based on the normalized real raw radar data. For instance, the processing circuitry 310 may be configured to normalize the real raw radar data through applying a minmax normalization to the real raw radar data. The minmax normalization may preserve the data distribution which is particularly beneficial for GAN and diffusion models, it may further avoid dominance of features and maintain outlier information. When using normalized data as input to the training, the processing circuitry 310 may further denormalize the synthetic raw radar data into a value range of the real raw radar data.

Alternatively, any other normalization technique may be used, such as feature scaling by range, robust scaling or Z-score normalization.

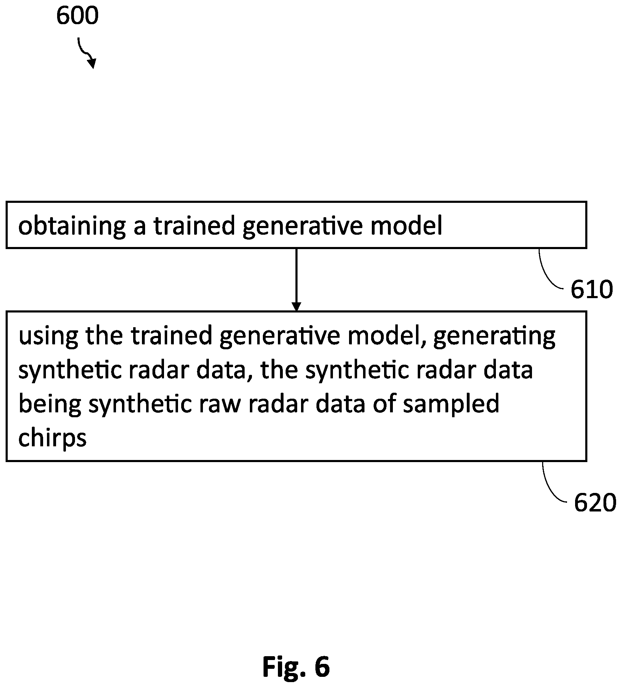

Fig. 6 illustrates an example of a method 600. For example, the method 600 may be executed by an apparatus as described herein, such as apparatus 100. The method 600 comprises obtaining 610 a trained generative model, such as a trained generative model described with reference to Fig. 4 or Fig. 5, and, using the trained generative model, generating 620 synthetic radar data, the synthetic radar data being synthetic raw radar data of sampled chirps.

More details and aspects of the method 600 are explained in connection with the proposed technique or one or more examples described above, e.g., with reference to Fig. 1. The method 600 may comprise one or more additional optional features corresponding to one or more aspects of the proposed technique, or one or more examples described above.

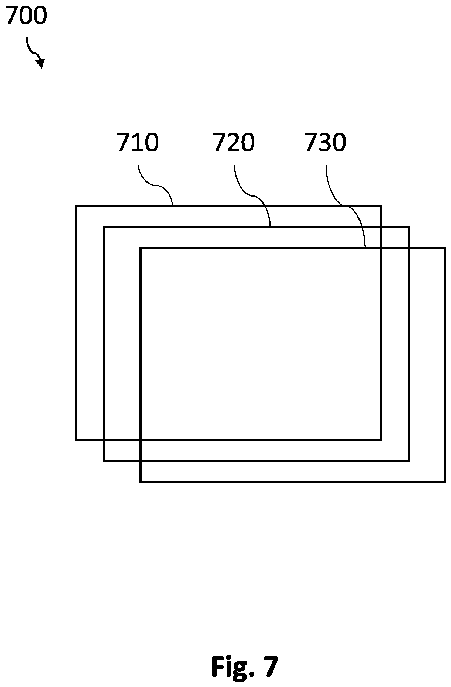

**Fig. 7** illustrates an example of synthetic radar data 700 obtainable by a method of generating training data for training a machine-learning model, as described herein, such as method 600. The synthetic radar data 700 is synthetic raw radar data of sampled chirps 710, 720, 730. In Fig. 7, three sampled chirps 710, 720, 730 stacked one over another are shown for illustrative purposes. However, in other examples, the synthetic radar data 700 may comprise any number $n \geq 2$ of sampled chirps in any data format or arrangement.

The synthetic radar data 700 may have several features which make them distinguishable from real radar data. For instance, the synthetic radar data 700 may have a statistical property, such as a correlation between different chirps of the synthetic radar data 700, which deviates from a statistical property of real radar data, by, e.g., a predefined value.

Further, the synthetic radar data 700 may be identified by certain artifacts, inconsistencies, anomalies or patterns which are unique to the generative model they were generated with. For instance, the artifacts may be quantified by their number in the synthetic radar data 700 or their percentage per a predefined number of data points of the synthetic radar data 700. For example, the synthetic radar data 700 may have a predefined share of artifacts in the data points. Deviations from known distributions of real radar data or statistically improbable combinations of values in the synthetic radar data 700 may also indicate the presence of synthetic data.

In some examples, the synthetic radar data 700 may be identifiable as synthetic by accompanying metadata. For instance, during generation of the synthetic radar data 700, it may be flagged with metadata including information about the generation method used to create the synthetic radar data 700, thereby indicating that the data 700 originates from a synthetic data generation process. The metadata may also provide details about a source of the synthetic radar data 700. In this case, the metadata may indicate that the data 700 is derived from noise or is generated from scratch (without any data basis). Additionally or alternatively, the metadata may provide information on how the synthetic radar data 700 is designed to mimic the statistical properties and distribution of real raw radar data. The metadata may, for instance, include information about the distribution characteristics of the trained generative model that generated the synthetic radar data 700.

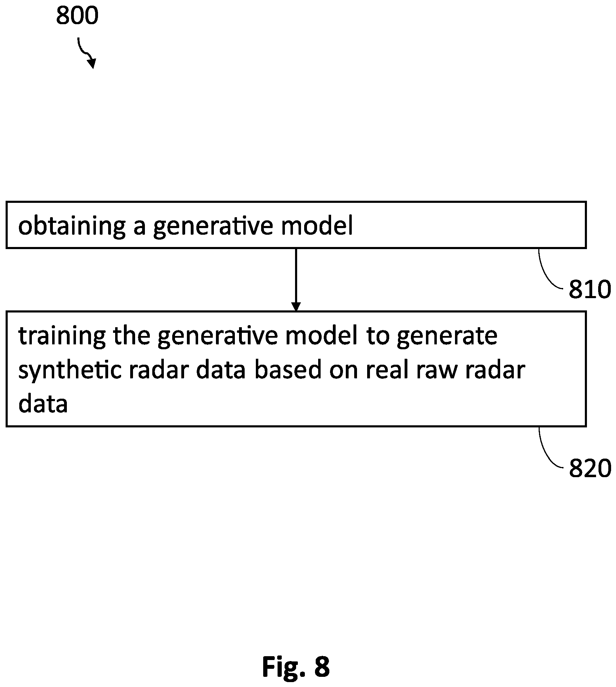

**Fig. 8** illustrates an example of a method 800 for training a generative model to generate synthetic radar data. The method 800 may be executed by an apparatus as described herein, such as apparatus 300. The synthetic radar data is synthetic raw radar data of sampled chirps. The method 800 comprises obtaining 810 a generative model and training 820 the generative model to generate the synthetic radar data based on real raw radar data.

More details and aspects of the method 800 are explained in connection with the proposed technique or one or more examples described above, e.g., with reference to Fig. 3. The method 800 may comprise one or more additional optional features corresponding to one or more aspects of the proposed technique, or one or more examples described above.

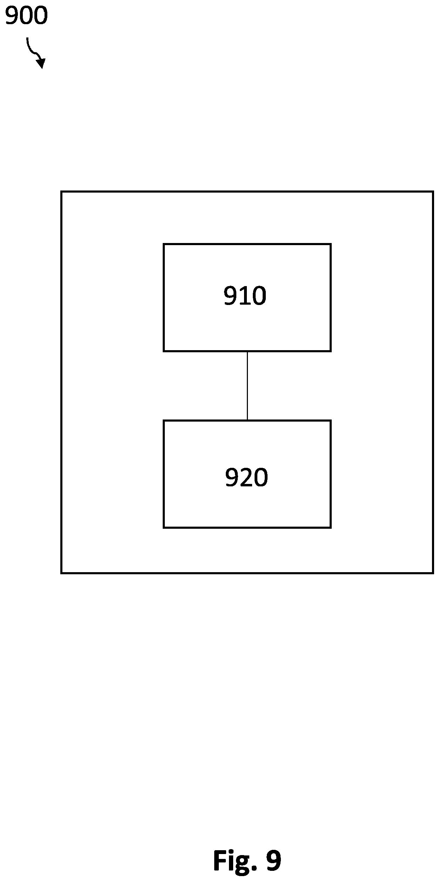

**Fig. 9** illustrates an example of a radar system 900. The radar system 900 comprises an apparatus 910 for training a generative model to generate synthetic radar data, as described herein, such as apparatus 300. The radar system 900 further comprises a radar sensor 920 configured to generate the real raw radar data. The radar sensor 920 may emit electromagnetic waves in the radio frequency range towards a target or an area of interest. The radar sensor 920 may then receive the reflected waves or echoes. Information about the echoes, such as signal amplitude and phase, is captured as real raw radar data, providing details about the presence, location, and characteristics of objects within the radar sensor's field of view.

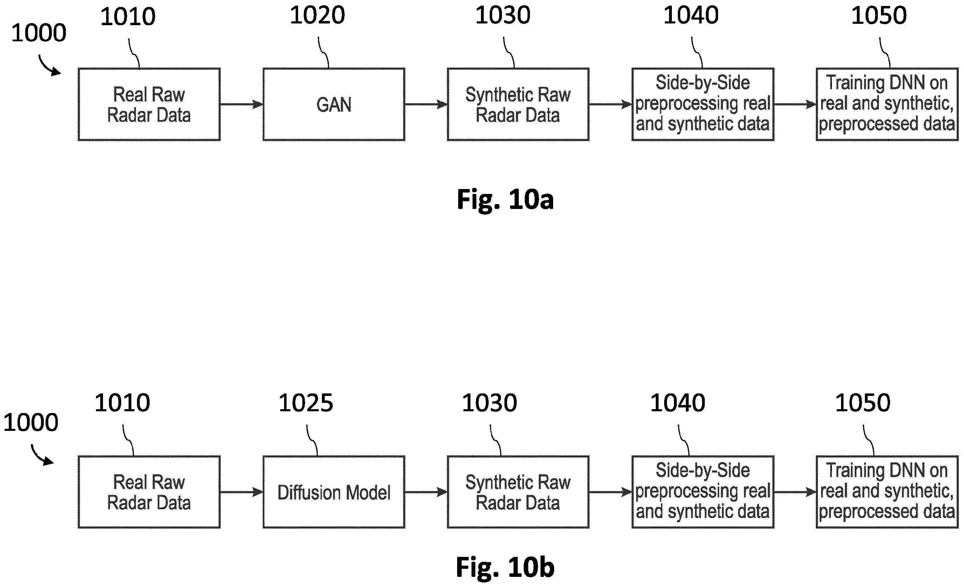

**Figs. 10a and 10b** illustrate another example of a method 1000 of generating training data for training a machine-learning model to perform a radar task. The method 1000 may be performed by an apparatus as described herein, such as apparatus 100 or 300.

The method 1000 comprises obtaining 1010 real raw radar data and obtaining a trained generative model, e.g., obtaining 1020 a GAN (Fig. 10a) or obtaining 1025 a diffusion model (Fig. 10b). For example, the real raw radar data may be fed into a training framework to train the generative model, yielding the trained generative model. The method 1000 further comprises, using the trained generative model, generating 1030 synthetic radar data being synthetic raw radar data of sampled chirps. For example, the trained generative model may output the synthetic radar data. The generative parts of the GAN or the diffusion model, i.e., the generator of the GAN and the backward diffusion model in the diffusion model, may be extracted and used to sample synthetic raw radar data.

The method 1000 further comprises preprocessing 1040 the synthetic radar data and the real raw radar data. For example, the synthetic radar data may be used alongside the real raw radar data in preprocessing pipelines to create range-doppler maps and range-micro-doppler maps. The method 1000 further comprises training 1050 the machine-learning model to perform the radar task based on the preprocessed synthetic radar data and the preprocessed real raw radar data. For instance, the range-doppler maps and range-micro-doppler maps may be input into a training framework of the machine-learning model. The machine-learning model may be a DNN, for instance.

In the following, some examples of the proposed technique are presented:

An example (e.g., example 1) relates to a method, the method comprising obtaining a trained generative model, and using the trained generative model, generating synthetic radar data, the synthetic radar data being synthetic raw radar data of sampled chirps.

Another example (e.g., example 2) relates to a previous example (e.g., example 1) or to any other example, further comprising training a machine-learning model to perform a radar task based on the synthetic radar data.

Another example (e.g., example 3) relates to a previous example (e.g., example 2) or to any other example, further comprising training the machine-learning model to perform the radar task based on real raw radar data.

Another example (e.g., example 4) relates to a previous example (e.g., one of the examples 2 or 3) or to any other example, further comprising determining labelled data through labelling the synthetic radar data or data derived thereof for the radar task, wherein training the machine-learning model comprises training the machine-learning model based on the labelled data.

Another example (e.g., example 5) relates to a previous example (e.g., one of the examples 2 to 4) or to any other example, further comprising extracting at least one signal characteristic from the synthetic radar data, wherein training the machine-learning model comprises training the machine-learning model based on the extracted at least one signal characteristic.

Another example (e.g., example 6) relates to a previous example (e.g., one of the examples 2 to 5) or to any other example, further comprising determining at least one of a range-velocity representation and a range-angle representation of the synthetic radar data, wherein training the machine-learning model comprises training the machine-learning model based on the determined at least one of the range-velocity representation and the range-angle representation of the synthetic radar data.

Another example (e.g., example 7) relates to a previous example (e.g., example 6) or to any other example, further comprising determining at least one of a range-velocity representation and a range-angle representation of real raw radar data, wherein training the machine-learning model comprises training the machine-learning model based on the determined at least one of the range-velocity representation and the range-angle representation of the real raw radar data.

Another example (e.g., example 8) relates to a previous example (e.g., one of the examples 2 to 7) or to any other example, further comprising determining a range-micro-velocity representation and a range-macro-velocity representation of the synthetic radar data, wherein training the machine-learning model comprises training the machine-learning model based on the determined range-micro-velocity representation and the determined range-macro-velocity representation of the synthetic radar data.

Another example (e.g., example 9) relates to a previous example (e.g., example 8) or to any other example, further comprising determining a range-micro-velocity representation and a range-macro-velocity representation of real raw radar data, wherein training the machine-learning model comprises training the machine-learning model based on the determined range-micro-velocity representation and range-macro-velocity representation of the real raw radar data.

Another example (e.g., example 10) relates to a previous example (e.g., one of the examples 1 to 9) or to any other example, further comprising training a generative model based on real raw radar data, yielding the trained generative model.

Another example (e.g., example 11) relates to a previous example (e.g., one of the examples 1 to 10) or to any other example, further comprising performing the radar task through analyzing further radar data using the trained machine-learning model.

Another example (e.g., example 12) relates to a previous example (e.g., example 11) or to any other example, further comprising that performing the radar task comprises detecting at least one of a gesture, a motion, a micro-motion, a macro-motion and presence of a target based on the further radar data.

Ann example (e.g., example 13) relates to synthetic radar data obtainable by a method of a previous example, (e.g., one of the examples 1 to 12) or to any other example.

An example (e.g., example 14) relates to a method for training a generative model to generate synthetic radar data, the synthetic radar data being synthetic raw radar data of sampled chirps, the method comprising training the generative model based on real raw radar data.

Another example (e.g., example 15) relates to a previous example (e.g., example 14) or to any other example, further comprising that training the generative model comprises training the generative model using a generative adversarial network, GAN, or a diffusion model.

Another example (e.g., example 16) relates to a previous example (e.g., example 15) or to any other example, further comprising that training the generative model comprises training the generative model using a style-based GAN.

Another example (e.g., example 17) relates to a previous example (e.g., example 15) or to any other example, further comprising that training the generative model comprises training the generative model using a latent diffusion model.

Another example (e.g., example 18) relates to a previous example (e.g., one of the examples 14 to 17) or to any other example, further comprising that training the generative model comprises setting hyperparameters of the generative model.

Another example (e.g., example 19) relates to a previous example (e.g., one of the examples 14 to 18) or to any other example, further comprising that the real raw radar data is multi-dimensional data arranged in an array.

Another example (e.g., example 20) relates to a previous example (e.g., one of the examples 14 to 19) or to any other example, further comprising that the real raw radar data indicates sampled chirps received from multiple channels of a radar sensor.

Another example (e.g., example 21) relates to a previous example (e.g., one of the examples 11 to 17) or to any other example, further comprising determining labelled data through labelling the real raw radar data or data derived thereof, wherein training the generative model comprises training the generative model based on the labelled data.

Another example (e.g., example 22) relates to a previous example (e.g., example 21) or to any other example, further comprising converting the real raw radar data into a Portable Network Graphics format or a Hierarchical Data Format, wherein determining labelled data comprises labelling the converted real raw radar data.

Another example (e.g., example 23) relates to a previous example (e.g., one of the examples 14 to 22) or to any other example, further comprising normalizing the real raw radar data, wherein training the generative model comprises training the generative model based on the normalized real raw radar data.

Another example (e.g., example 24) relates to a previous example (e.g., example 23) or to any other example, further comprising that normalizing the real raw radar data comprises applying a minmax normalization to the real raw radar data.

An example (e.g., example 25) relates to an apparatus, the apparatus comprising processing circuitry configured to obtain a trained generative model, and using the trained generative model, generate synthetic radar data, the synthetic radar data being synthetic raw radar data of sampled chirps.

Another example (e.g., example 26) relates to a previous example (e.g., example 25) or to any other example, further comprising that the processing circuitry is further configured to train a machine-learning model to perform a radar task based on the synthetic radar data.

Another example (e.g., example 27) relates to a previous example (e.g., example 26) or to any other example, further comprising that the processing circuitry is further configured to train the machine-learning model to perform the radar task based on real raw radar data.

Another example (e.g., example 28) relates to a previous example (e.g., one of the examples 26 or 27) or to any other example, further comprising that the processing circuitry is further configured to determine labelled data through labelling the synthetic radar data or data derived thereof for the radar task, wherein the processing circuitry is configured to train the machine-learning model based on the labelled data.

Another example (e.g., example 29) relates to a previous example (e.g., one of the examples 26 to 28) or to any other example, further comprising that the processing circuitry is further configured to extract at least one signal characteristic from the synthetic radar data, wherein the processing circuitry is configured to train the machine-learning model based on the extracted at least one signal characteristic.

Another example (e.g., example 30) relates to a previous example (e.g., one of the examples 26 to 29) or to any other example, further comprising that the processing circuitry is further configured to determine at least one of a range-velocity representation and a range-angle representation of the synthetic radar data, wherein the processing circuitry is configured to train the machine-learning model based on the determined at least one of the range-velocity representation and the range-angle representation of the synthetic radar data.

Another example (e.g., example 31) relates to a previous example (e.g., example 30) or to any other example, further comprising that the processing circuitry is further configured to determine at least one of a range-velocity representation and a range-angle representation of real raw radar data, wherein the processing circuitry is configured to train the machine-learning model based on the determined at least one of the range-velocity representation and the range-angle representation of the real raw radar data.

Another example (e.g., example 32) relates to a previous example (e.g., one of the examples 26 to 31) or to any other example, further comprising that the processing circuitry is further configured to determine a range-micro-velocity representation and a range-macro-velocity representation of the synthetic radar data, wherein the processing circuitry is configured to train the machine-learning model based on the determined range-micro-velocity representation and the determined range-macro-velocity representation of the synthetic radar data.

Another example (e.g., example 33) relates to a previous example (e.g., example 32) or to any other example, further comprising that the processing circuitry is further configured to determine a range-micro-velocity representation and a range-macro-velocity representation of real raw radar data, wherein the processing circuitry is configured to train the machine-learning model based on the determined range-micro-velocity representation and range-macro-velocity representation of the real raw radar data.

Another example (e.g., example 34) relates to a previous example (e.g., one of the examples 25 to 33) or to any other example, further comprising that the processing circuitry is further configured to train a generative model based on real raw radar data, yielding the trained generative model.

Another example (e.g., example 35) relates to a previous example (e.g., one of the examples 25 to 34) or to any other example, further comprising that the processing circuitry is further configured to perform the radar task through analyzing further radar data using the trained machine-learning model.

Another example (e.g., example 36) relates to a previous example (e.g., example 35) or to any other example, further comprising that the processing circuitry is configured to perform the radar task through detecting at least one of a gesture, a motion, a micro-motion, a macro-motion and presence of a target based on the further radar data.

An example (e.g., example 37) relates to an apparatus for training a generative model to generate synthetic radar data, the synthetic radar data being synthetic raw radar data of sampled chirps, the apparatus comprising processing circuitry configured to train the generative model based on real raw radar data.

Another example (e.g., example 38) relates to a previous example (e.g., example 37) or to any other example, further comprising that the processing circuitry is configured to train the generative model using a generative adversarial network, GAN, or a diffusion model.

Another example (e.g., example 39) relates to a previous example (e.g., example 38) or to any other example, further comprising that the processing circuitry is configured to train the generative model using a style-based GAN.

Another example (e.g., example 40) relates to a previous example (e.g., example 38) or to any other example, further comprising that the processing circuitry is configured to train the generative model using a latent diffusion model.

Another example (e.g., example 41) relates to a previous example (e.g., one of the examples 37 to 40) or to any other example, further comprising that the processing circuitry is configured to train the generative model through setting hyperparameters of the generative model.

Another example (e.g., example 42) relates to a previous example (e.g., one of the examples 37 to 41) or to any other example, further comprising that the real raw radar data is multi-dimensional data arranged in an array.

Another example (e.g., example 43) relates to a previous example (e.g., one of the examples 37 to 43) or to any other example, further comprising that the real raw radar data indicates sampled chirps received from multiple channels of a radar sensor.

Another example (e.g., example 44) relates to a previous example (e.g., one of the examples 37 to 43) or to any other example, further comprising that the processing circuitry is further configured to determine labelled data through labelling the real raw radar data or data derived thereof, wherein the processing circuitry is configured to train the generative model based on the labelled data.

Another example (e.g., example 45) relates to a previous example (e.g., one of the examples 37 to 44) or to any other example, further comprising that the processing circuitry is further configured to convert the real raw radar data into a Portable Network Graphics format or a Hierarchical Data Format, wherein the processing circuitry is configured to train the generative model based on the converted real raw radar data.

Another example (e.g., example 46) relates to a previous example (e.g., one of the examples 37 to 45) or to any other example, further comprising that the processing circuitry is further configured to normalize the real raw radar data, wherein the processing circuitry is configured to train the generative model based on the normalized real raw radar data.

Another example (e.g., example 47) relates to a previous example (e.g., example 46) or to any other example, further comprising that the processing circuitry is configured to normalize the real raw radar data through applying a minmax normalization to the real raw radar data.

An example (e.g., example 48) relates to a radar system, comprising an apparatus of a previous example (e.g., of any one of examples 37 to 47), and a radar sensor configured to generate the real raw radar data.

Another example (e.g., example 49) relates to a non-transitory machine-readable medium having stored thereon a program having a program code for performing a method of a previous example (e.g., of any one of examples 1 to 12), when the program is executed on a processor or a programmable hardware.

Another example (e.g., example 50) relates to a program having a program code for performing a method of a previous example (e.g., any one of examples 1 to 12), when the program is executed on a processor or a programmable hardware.

Another example (e.g., example 51) relates to a non-transitory machine-readable medium having stored thereon a program having a program code for performing a method of a previous example (e.g., any one of examples 14 to 24), when the program is executed on a processor or a programmable hardware.

Another example (e.g., example 52) relates to a program having a program code for performing a method of a previous example (e.g., of any one of examples 14 to 24), when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. A method (600) comprising:

   obtaining (610) a trained generative model; and
   using the trained generative model, generating (620) synthetic radar data, the synthetic radar data being synthetic raw radar data of sampled chirps.

2. The method (600) of claim 1, further comprising training a machine-learning model to perform a radar task based on the synthetic radar data.

3. The method (600) of claim 2, further comprising extracting at least one signal characteristic from the synthetic radar data, wherein training the machine-learning model comprises training the machine-learning model based on the extracted at least one signal characteristic.

4. The method (600) of any one of claims 2 or 3, further comprising determining at least one of a range-velocity representation and a range-angle representation of the synthetic radar data, wherein training the machine-learning model comprises training the machine-learning model based on the determined at least one of the range-velocity representation and the range-angle representation of the synthetic radar data.

5. The method (600) of claim 4, further comprising determining at least one of a range-velocity representation and a range-angle representation of real raw radar data, wherein training the machine-learning model comprises training the machine-learning model based on the determined at least one of the range-velocity representation and the range-angle representation of the real raw radar data.

6. The method (600) of any one of claims 2 to 5, further comprising determining a range-micro-velocity representation and a range-macro-velocity representation of the synthetic radar data, wherein training the machine-learning model comprises training the machine-learning model based on the determined range-micro-velocity representation and the determined range-macro-velocity representation of the synthetic radar data.

7. Synthetic radar data (700) obtainable by a method according to any one of the previous claims.

8. The synthetic radar data (700) of claim 7, wherein the synthetic radar data (700) comprises metadata indicating that the synthetic radar data (700) is synthetic.

9. A method (800) for training a generative model to generate synthetic radar data, the synthetic radar data being synthetic raw radar data of sampled chirps, the method (800) comprising training (820) the generative model based on real raw radar data.

10. The method (800) of claim 9, wherein training (820) the generative model comprises training the generative model using a generative adversarial network, GAN, or a diffusion model.

11. The method (800) of claim 10, wherein training (820) the generative model comprises training the generative model using a style-based GAN.

12. The method (800) of claim 10, wherein training (820) the generative model comprises training the generative model using a latent diffusion model.

13. An apparatus (100) comprising processing circuitry (110) configured to:

    obtain a trained generative model; and
    using the trained generative model, generate synthetic radar data, the synthetic radar data being synthetic raw radar data of sampled chirps.

14. An apparatus (300) for training a generative model to generate synthetic radar data, the synthetic radar data being synthetic raw radar data of sampled chirps, the apparatus (300) comprising processing circuitry (310) configured to train the generative model based on real raw radar data.

15. A radar system (900), comprising:

    an apparatus (910) according to claim 14; and
    a radar sensor (920) configured to generate the real raw radar data.

100

**Fig. 1**

**Fig. 2**

300

**Fig. 3**

**Fig. 4**

500

530 — Noise

520 — Raw Radar Data Sample with Noise

510 — Raw Radar Data Sample

Fig. 5

600

┌─────────────────────────────────────────────────────────┐
│ obtaining a trained generative model                    │
└─────────────────────────────────────────────────────────┘
                                                    └ 610

┌─────────────────────────────────────────────────────────┐
│ using the trained generative model, generating          │
│ synthetic radar data, the synthetic radar data          │
│ being synthetic raw radar data of sampled               │
│ chirps                                                   │
└─────────────────────────────────────────────────────────┘
                                                    └ 620

**Fig. 6**

700

710    720    730

**Fig. 7**

800

obtaining a generative model

810

training the generative model to generate
synthetic radar data based on real raw radar
data

820

**Fig. 8**

900

**Fig. 9**

1000

1010 — Real Raw Radar Data → 1020 — GAN → 1030 — Synthetic Raw Radar Data → 1040 — Side-by-Side preprocessing real and synthetic data → 1050 — Training DNN on real and synthetic, preprocessed data

**Fig. 10a**

1000

1010 — Real Raw Radar Data → 1025 — Diffusion Model → 1030 — Synthetic Raw Radar Data → 1040 — Side-by-Side preprocessing real and synthetic data → 1050 — Training DNN on real and synthetic, preprocessed data

**Fig. 10b**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/255300 A1 (HARRISON MATTHEW PAUL [US]) 19 August 2021 (2021-08-19) * paragraphs [0015], [0034], [0045], [0059], [0063], [0064], [0074], [0086]; figure 7 * | 1-5,7-15 | INV. G01S7/41 G01S13/42 G01S13/58 G06N3/045 G06N3/0475 |
| X | EP 4 060 367 A1 (FRAUNHOFER GES FORSCHUNG [DE]) 21 September 2022 (2022-09-21) * paragraphs [0102], [0103], [0104], [0105], [0107]; figures 8a, 8b * | 1-3,7-15 | G01S7/40 |
| A | PARK SEONGUK ET AL: "Range-Doppler Map Augmentation by Generative Adversarial Network for Deep UAV Classification", 2022 IEEE RADAR CONFERENCE (RADARCONF22), IEEE, 21 March 2022 (2022-03-21), pages 1-7, XP034118568, DOI: 10.1109/RADARCONF2248738.2022.9764177 * figure 2 * * abstract * | 5 | |
| A | EROL BARIS ET AL: "Motion Classification Using Kinematically Sifted ACGAN-Synthesized Radar Micro-Doppler Signatures", IEEE TRANSACTIONS ON AEROSPACE AND ELECTRONIC SYSTEMS, IEEE SERVICE CENTER, PISCATAWAY, NJ, US, vol. 56, no. 4, 24 January 2020 (2020-01-24), pages 3197-3213, XP011802267, ISSN: 0018-9251, DOI: 10.1109/TAES.2020.2969579 [retrieved on 2020-08-06] * VI conclusion * * abstract * | 6 | |

**TECHNICAL FIELDS SEARCHED (IPC)**

G01S
G06N

-/--

The present search report has been drawn up for all claims

| Place of search | Date of completion of the search | Examiner |
|---|---|---|
| Munich | 9 January 2024 | Auinger, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

**Application Number**

EP 23 18 8432

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WU CHAOYANG ET AL: "Generative Adversarial Network for Radar-Based Human Activities Classification with Low Training Data Support", 2021 IEEE 4TH INTERNATIONAL CONFERENCE ON ELECTRONIC INFORMATION AND COMMUNICATION TECHNOLOGY (ICEICT), IEEE, 18 August 2021 (2021-08-18), pages 415-419, XP033972016, DOI: 10.1109/ICEICT53123.2021.9531147 [retrieved on 2021-09-07] * abstract * | 6 | |
| A | QU LELE ET AL: "Human Activity Recognition Based on WRGAN-GP-Synthesized Micro-Doppler Spectrograms", IEEE SENSORS JOURNAL, IEEE, USA, vol. 22, no. 9, 1 April 2022 (2022-04-01), pages 8960-8973, XP011907252, ISSN: 1530-437X, DOI: 10.1109/JSEN.2022.3164152 [retrieved on 2022-04-01] * abstract * | 6 | |
| A | Sabrepc: "GANs vs Di usion Models –Generative AI Comparison", , 12 May 2023 (2023-05-12), pages 1-7, XP93116308, Retrieved from the Internet: URL:https://www.sabrepc.com/blog/Deep-Learning-and-AI/gans-vs-diffusion-models [retrieved on 2024-01-05] * page 4 * | 10 | **TECHNICAL FIELDS SEARCHED (IPC)** |

The present search report has been drawn up for all claims

| Place of search | Date of completion of the search | Examiner |
|---|---|---|
| Munich | 9 January 2024 | Auinger, Florian |

EPO FORM 1503 03.82 (P04C01)

page 2 of 2

## ANNEX TO THE EUROPEAN SEARCH REPORT
## ON EUROPEAN PATENT APPLICATION NO.

**EP 23 18 8432**

This annex lists the patent family members relating to the patent documents cited in the above-mentioned European search report.
The members are as contained in the European Patent Office EDP file on
The European Patent Office is in no way liable for these particulars which are merely given for the purpose of information.

**09-01-2024**

| Patent document cited in search report | | Publication date | Patent family member(s) | | Publication date |
|---|---|---|---|---|---|
| US 2021255300 | A1 | 19-08-2021 | NONE | | |
| EP 4060367 | A1 | 21-09-2022 | EP | 4060367 A1 | 21-09-2022 |
| | | | WO | 2022194516 A1 | 22-09-2022 |

EPO FORM P0459

For more details about this annex : see Official Journal of the European Patent Office, No. 12/82